# Europäisches Patentamt

# European Patent Office

# Office européen des brevets

(19)

(11) Veröffentlichungsnummer: **0 047 961**
**B1**

(12) ## EUROPÄISCHE PATENTSCHRIFT

(45) Veröffentlichungstag der Patentschrift:
21.11.84

(51) Int. Cl.³: **B 60 D 1/06**

(21) Anmeldenummer: 81107045.7

(22) Anmeldetag: 08.09.81

(54) **Kugelkopfkupplung für Kraftfahrzeuge.**

(30) Priorität: 11.09.80 DE 3034137
28.08.81 DE 3134008

(73) Patentinhaber: **Westfalia-Werke Franz Knöbel & Söhne KG, Am Sandberg 45, D-4840 Rheda-Wiedenbrück (DE)**

(43) Veröffentlichungstag der Anmeldung:
24.03.82 Patentblatt 82/12

(72) Erfinder: **Hermbusch, Gerd, Ing.grad., Westfalen Strasse 24, D-4831 Langenberg (DE)**

(45) Bekanntmachung des Hinweises auf die Patenterteilung:
21.11.84 Patentblatt 84/47

(74) Vertreter: **Meldau, Gustav, Dipl.-Ing., Vennstrasse 9, D-4830 Gütersloh 1 (DE)**

(84) Benannte Vertragsstaaten:
**BE FR NL SE**

(56) Entgegenhaltungen:
**EP - A - 0 037 572**
**DE - A - 1 630 928**
**DE - A - 1 655 012**
**DE - A - 2 410 169**
**DE - A - 2 723 073**
**DE - A - 2 822 662**
**DE - A - 2 841 746**
**DE - A - 2 935 385**
**DE - A - 2 935 474**
**DE - A - 3 000 824**
**US - A - 2 320 397**
**US - A - 2 978 260**

BUNDESDRUCKEREI BERLIN

**Beschreibung**

Die Erfindung bezieht sich auf eine verdeckt an Kraftfahrzeugen anzubringende Kugelkopfkupplung mit einer Aufnahmehülse, die etwa senkrecht hinter der Stoßstange angeordnet ist und die keilförmige Schrägflächen zwischen den gegeneinander beweglichen Teilen der Hülse bzw. des Befestigungshalses zum Festspannen nach dem Einsatz mittels in Längsrichtung des Befestigungshalses wirkenden Spannmitteln aufweist.

Derartige Kugelkopfkupplungen sind bekannt aus der DE-A-2 822 662. Es ist bekannt, bei derartigen Kugelkopfkupplungen eine spiel- und klapperfreie Verbindung herzustellen, dadurch daß die Halterung eine den Kugelstangenschaft mit angemessenem Spiel umfassende Hülse ist, an die ein zur Einführrichtung der Kugelstange weisender Sitz angearbeitet ist und der Sitz eine an der Kugelstange angebrachte entsprechende Paßfläche aufnimmt, wobei die Paßfläche durch einen durch Bohrungen der Hülse und des Kugelstangenschaftes hindurchgreifenden Exzenterbolzen auf den Sitz aufpreßbar ist. Hierbei kann der Sitz in der Hülse sowohl an deren vorderen Stirnseite wie auch am hinteren Hülsenende angeordnet sein. Bei dieser Ausführung läßt es sich jedoch nicht immer vermeiden, daß noch Teile der Halterung, also der Hülse, über die Silhouette der Stoßstange hinausstehen. Dies ist auch dann der Fall, wenn die Hülse nicht in der Längsrichtung des Fahrzeuges, sondern senkrecht oder nahezu senkrecht angeordnet ist. Außerdem muß bei dieser Anordnung darauf geachtet werden, daß die Bodenfreiheit des Fahrzeuges nicht beeinträchtigt wird. Bei Kugelkopfkupplungen, bei denen der Kugelhals mit einer vorderen Abwinklung versehen ist und die Einsteckhülse etwa senkrecht hinter der hinteren Stoßstange des Kraftfahrzeuges oder hinter einem anderen überfangenden Karosserieteil angeordnet ist, besteht die Schwierigkeit darin, die Haltevorrichtung für den Kugelhals in der Hülse zu betätigen oder erreichbar zu machen, da die Aufnahmehülse selbst ja verdeckt angeordnet ist.

Die Erfindung hat sich die Aufgabe gestellt, eine Kugelkopfkupplung der eingangs genannten Gattung zu schaffen, bei der das Einsetzen und Abnehmen einfach mit leicht von außen erreichbaren Betätigungsvorrichtungen durchzuführen ist und bei der mehrfache Sicherung gegen Herausfallen im eingesetzten Zustand vorhanden ist.

Zur Lösung dieser Aufgabe ist nach der Erfindung eine Kugelkopfkupplung der eingangs beschriebenen Art dadurch gekennzeichnet, daß der nach oben abgewinkelte Befestigungshals der Kugelkopfkupplung mit einer in einer axialen Bohrung des Befestigungshalses geführten Stange versehen ist, an deren oberem Ende ein Hammerkopf zur hintergreifenden Halterung der Stange in einem Deckelabschluß der Hülse bei Verdrehung der Stange und an deren unterem frei aus dem Befestigungshals herausragenden Ende ein Betätigungshebel vorgesehen sind, und wobei die Spannmittel über die Stange und den Hammerkopf aktiviert werden.

Damit ist der Befestigungshals in der Hülse anzubringen und zu sichern, in dem nach dem Einstecken und Durchführen des Hammerkopfes durch den Schlitz im Deckel mittels des Spannhebels über die Stange der Hammerkopf gegenüber diesem Schlitz verdreht wird, so daß er sich auf dem Deckel abstützt und damit der Befestigungshals in der Hülse gehalten ist. Da wegen der Abwinklung auf die Verbindung zwischen Befestigungshals und Hülse keine Zugkräfte wirken, die den Hals aus der Hülse herauszuziehen suchen, hat diese Verbindung auch keinen besonders hohen Beanspruchungen standzuhalten, die eigentlichen Zugkräfte werden ja aufgenommen dadurch, daß der Befestigungshals gegenüber der Zugrichtung etwa rechtwinklig abgebogen ist.

Nach einer Ausführungsform der Erfindung, kann an der Stange am unteren Ende ein, von dem Spannhebel verdrehbarer Exzenter gelagert sein und am oberen Ende der Stange eine Hülse angeschraubt sein, an deren oberem Ende der Hammerkopf sitzt.

Nach einer anderen Ausführungsform der Erfindung, kann der Betätigungshebel als Spannhebel gegen ein am Befestigungshals angeordnetes Widerlager anliegen und die Oberseite des Deckelteils der Hülse mit von radial einander gegenüberliegenden Kanten des Durchlaßschlitzes ansteigenden, bis zu den Gegenkanten reichenden keilförmigen Schrägflächen versehen sein.

Nach einer Weiterbildung der Erfindung ist der Anschlußdeckel im oberen Ende der Aufnahmehülse axial beweglich geführt und über ein Paket aus Tellerfedern auf einem hülsenfesten Vorsprung abgestützt. Die Führung des Deckels kann mittels mindestens einer radial vorstehenden Führungsnase erfolgen, die einen achsparallel verlaufenden Schlitz in der Aufnahmehülse durchdringt. Der hülsenfeste Vorsprung ist zweckmäßig aus einer Einsatzhülse gebildet, deren Außenmantel zylindrisch der Innenfläche der Aufnahmehülse angepaßt ist und deren Innenraum konisch mit nach oben abnehmendem Querschnitt ausgebildet ist. Im letzteren Fall ist das obere Ende des Befestigungsbolzens ebenfalls konisch geformt, dem Innenkonus des hülsenfesten Einsatzes angepaßt.

Aufgrund dieser Merkmalsgruppe wird erreicht, daß der Befestigungshals in der Aufnahmehülse fest, sicher und formschlüssig gehalten ist. Aufgrund der Verdrehung des Hammerkopfes gegenüber dem Schlitz in dem Deckel und der Betätigung des Exzenters mit dem Spannhebel wird der Befestigungshals mit Spannung formschlüssig gegen seine konische Aufnahme und Halterung gezogen aufgrund der Wirkung der Tellerfedern, die unmittelbar unter dem Deckel angeordnet sind. Durch den so erzeugten festen Andruck ist einerseits verhindert, daß auch bei extremen Beanspruchungen und bei einem Verschleiß, der über längere Zeit auftreten könnte, eine Lockerung der Kugelkupplung in ihrem Sitz erfolgen könnte, andererseits werden dadurch auch extreme Belastungen, beispielsweise bei Durchfahren von Schlaglöchern, unachtsamen kräftigem Aufsetzen der Deichsel auf die Kupplungskugel von oben her u. ä. ausgeglichen bzw. eliminiert. Die Spannung der Tellerfedern besorgt einen ständigen Andruck der konischen Fläche des Befestigungshalses in dem Innenkonus der Aufnahmehülse. Dadurch ist ständig eine spielfreie Anlage zwischen den beiden Teilen gewährleistet, und es ist insbesondere vermieden, daß aufgrund eines kleinen Spiels durch starke Belastungen und Wechselspiele von Belastungen im Laufe der Zeit die Lagerung zwischen Hals und Hülse ausschlagen und damit das Spiel vergrößern könnte. Diese Anordnung ist auch einfach und damit kostensparend herzustellen sowie leicht und ohne Werkzeuge zusammenzusetzen und auseinanderzunehmen.

Nach einer Weiterbildung der Erfindung ist die an dem oberen Ende der Stange angeschraubte Hülse in einer Bohrung geführt, die in dem oberen Ende des Befestigungshalses angeordnet ist und unterhalb der geschraubten Hülse eine Schraubendruckfeder enthält. Weiterhin ist die Hülse mittels eines durch eine radiale Bohrung in der Stange und ein Langloch in der Hülse geführten Stifts gegen Verdrehen gesichert. Damit ist nicht nur eine Sicherung gegen Verdrehen, sondern auch eine Verstellung und Anpassung der Federspannung ermöglicht.

Eine andere Ausführung zeichnet sich dadurch aus, daß der hülsenfeste Vorsprung aus einer Buchse gebildet ist, die als Hohlzylinder ausgebildet, mit ihrem unteren Ende gegen einen Vorsprung der Aufnahmehülse anliegt. Dabei ist die Stange oberhalb des Konus mit einem durch eine Querbohrung gesteckten Stift versehen der auf einer Scheibe aufliegt, die ihrerseits auf dem Konus liegt und in dem oberen Ende des Befestigungshalses und unterhalb der Scheibe ist eine Schraubendruckfeder angeordnet.

Die Aufnahmehülse ist nach einer Weiterbildung der Erfindung am unteren offenen Ende schräg abgeschnitten, und zwar mit dem höheren Teil des Schrägschnittes nach hinten weisend. In dem Schrägschnitt sind zweckmäßig radial einander gegenüberliegend auf halber Höhe zwei Einschnitte angeordnet. Von dem Befestigungshals ragt mindestens ein in einem der Einschnitte eingreifender Vorsprung radial hervor. Durch diese Anordnung ist eine genaue Ausrichtung des Kugelkopfes der Kupplung in der Längsachse des Fahrzeuges sichergestellt sowie eine Festlegung gegen seitlich einwirkende Beanspruchungen, die in Richtung einer Verdrehung des Befestigungshalses in der Hülse wirken. Es wird damit auch zusätzlich das Einsetzen des Befestigungshalses in der Hülse vereinfacht.

Nach einer besonders bevorzugten Ausführungsform ist der Vorsprung, der radial aus dem Befestigungshals hervorragt, als Rundstift ausgebildet, und außerhalb der Aufnahmehülse eine Sperrklinke in Form eines Winkelhebels darauf gelagert, dessen etwa achsparalleler Winkelarm mit einem Klinkenvorsprung einen hülsenfesten Haltestein hintergreift und dessen anderer Winkelarm etwa parallel zu dem hinteren abgewinkelten Hals der Kugelkopfkupplung verlaufend, diese mit einem Handhabungsgriff an seinem Ende überragt. Zweckmäßig ist der Haltestein in Fahrtrichtung vor dem Rundstift an der Aufnahmehülse befestigt.

Es ist hiermit nicht nur eine weitere Sicherung der in die Aufnahmehülse einzusetzenden Kugelkopfkupplung gegen Herausfallen erreicht, sondern es wird damit auch die Handhabung wesentlich verbessert, denn sowohl beim Einsetzen als auch beim Abnehmen wird die formschlüssige Verbindung nicht nur durch den gegenüber dem Durchgangsschlitz in dem Deckel verschwenkten Hammerkopf erreicht, sondern schon vor dem Verschwenken des Hammerkopfes wird der Befestigungshals in der Aufnahmehülse mittels der Klinke gehalten, so daß beim Einsetzen dann anschließend der Hammerkopf verschwenkt und mittels des Spannhebels gegen die Federkraft angespannt werden kann.

Vorteilhaft ist eine weitere Sicherung angeordnet, und zwar ist vorzugsweise nahe dem unteren Ende der Aufnahmehülse und/oder an der Sperrklinke, im Befestigungshals und in der Stange eine durchgehende Bohrung zur Aufnahme eines Sicherungsstiftes angeordnet. Zweckmäßig sind der Hammer und der Spannhebel an den beiden Enden der Stange etwa in einem rechten Winkel zueinander angeordnet, und der Schlitz in dem Abschlußdeckel ist etwa parallel zur Fahrzeuglängsachse angeordnet. Dadurch ergibt sich die einfachste Handhabung, insofern, als beim Einsetzen der Spannhebel und der waagerechte Hals der Kugelkopfkupplung einen rechten Winkel zueinander bilden und nach dem Einsetzen der Spannhebel unter den Hals geschwenkt wird. Vorzugsweise ist an dem etwa waagerecht verlaufenden Teil des Kugelhalses eine Lagerung und/oder Halterung für den Spannhebel angeordnet.

Die Erfindung wird nachstehend anhand eines Ausführungsbeispiels mit Bezug auf die Zeichnungen näher erläutert. In den Zeichnungen zeigt

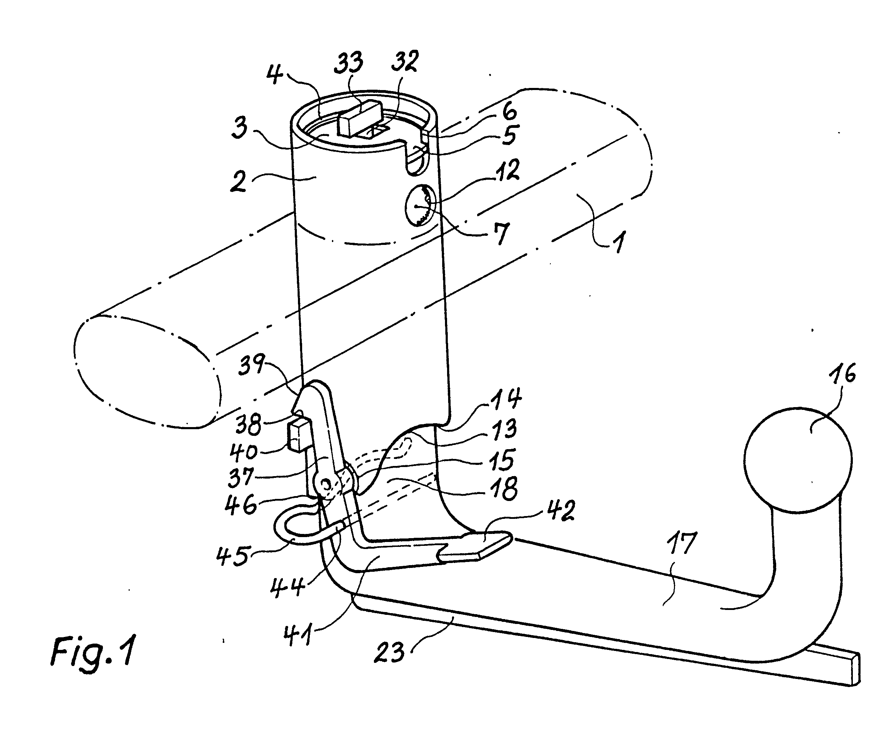

Fig. 1 eine perspektivische Ansicht der Kugelkopfkupplung,

Fig. 2 einen senkrechten Schnitt durch die Kugelkopfkupplung,

Fig. 3 einen senkrechten Schnitt durch die Kugelkopfkupplung, nach einem anderen Ausführungsbeispiel,

Fig. 4 eine Abwicklung des Abschlußdeckels im oberen Ende der Aufnahmehülse,

Fig. 5 eine Ansicht der Stange.

Die Kugelkopfkupplung ist derart dargestellt, daß sie mit einem strich-punktierten Längsträger in Form eines Ovalrohres 1 verbunden ist. Ob die Aufnahmehülse 2 mittels eines Querträgers mit dem Fahrzeugaufbau verbunden ist oder aber mittels eines oder mehrerer Längs- oder Schrägträger, ist gleichgültig. Wesentlich ist lediglich,
daß die Aufnahmehülse 2 etwa senkrecht und
verdeckt am hinteren Ende des Fahrzeuges angeordnet ist. Verdeckt wird sie im allgemeinen
durch die dahinter gebaute Stoßstange, eine
Schürze bzw. einen Spoiler an dem Fahrzeugaufbau.

Die Aufnahmehülse 2 ist an ihrem oberen
Ende mit einem Deckel 3 versehen, der in Form
einer Scheibe in den freien Innenraum der Hülse
2 eingesetzt ist. Gegen Herausfallen ist der Dekkel 3 gesichert durch einen Spannring 4, der in
eine Nute unmittelbar unter dem oberen Ende
der Hülse 2 eingesetzt ist.

Der Deckel 3 ist in der Aufnahmehülse 2 axial
beweglich und mit mindestens einer vorstehenden Führungsnase 5 versehen, die in einem achsparallel verlaufenden Schlitz 6 in der Aufnahmehülse 2 eingreift. Der Deckel 3 kann sich also
axial in der Aufnahmehülse verschieben, er kann
sich jedoch nicht verdrehen.

Im Abstand unterhalb des Deckels 3 ist in der
Aufnahmehülse 2 ein Widerlager ausgebildet in
Form einer Einsatzhülse 7, deren Außenmantel 8
zylindrisch geformt der Innenfläche der Aufnahmehülse 2 angepaßt ist. Auf der Innenseite ist
die Einsatzhülse 7 mit einer konischen Fläche
ausgebildet, deren kleinster Durchmesser an ihrem oberen Ende ist. Mit ihrer weiten Oberseite
10 bildet die Einsatzhülse 7 die Auflage für ein
Paket 11 aus Tellerfedern, das zwischen dem Abschlußdeckel 3 und der Einsatzhülse 7 eingebaut
ist. Über dieses Paket 11 aus Tellerfedern ist der
Abschlußdeckel 3 auf die Einsatzhülse 7 abgestützt, die ihrerseits, beispielsweise mittels
Schweißnähten 12, fest mit der Aufnahmehülse
2 verbunden ist.

An ihrem unteren Ende ist die Aufnahmehülse
2 schräg abgeschnitten, wobei der höhere Teil 14
des Schrägschnittes 13 nach hinten weist. In
dem Schrägschnitt sind radial einander gegenüberliegend, auf halber Höhe zwei Einschnitte 15
in der Aufnahmehülse 2 angeordnet.

Die Kugelkopfkupplung mit dem Kugelkopf 16
hat einen abgewinkelten, etwa waagerecht liegenden Hals 17 und einen davon wiederum wieder rechtwinklig abgewinkelten Befestigungshals 18. Der Befestigungshals 18 ist an seinem
oberen Ende mit einem Konus 19 versehen, der in
den Innenkonus 9 der Einsatzhülse 7 hineinpaßt.
Weiterhin ist der Befestigungshals 18 mit einer
axial durchgehenden Bohrung 20 versehen, in
der eine Stange 21 geführt ist. Diese Stange 21
ragt am unteren Ende aus dem Befestigungshals
18 heraus und ist dort mit einer Lagerung, vorzugsweise in Form eines Lagerstiftes 22 versehen, an dem ein Spannhebel 23 verschwenkbar
gelagert ist. Der Spannhebel 23 ist an seiner, der
Unterseite des Befestigungshalses 18 zugewandten Seite mit einer Exzenterfläche 24 versehen, zweckmäßig unter Zwischenschaltung einer
Auflegescheibe 25. Die Anordnung ist derart getroffen, daß in der dargestellten Stellung des
Spannhebels 23 die Exzenterkurve 24 den größten Abstand zwischen dem Lagerstift 22 und der
Unterseite des Befestigungshalses 18 erzeugt,
während der geringste Abstand vorhanden ist,
wenn der Spannhebel etwa in Verlängerung der
Stange 21 nach unten gerichtet ist.

An dem oberen Ende der Stange 21 ist auf ein
Gewinde 26 eine Hülse 27 aufgeschraubt. Zur
Aufnahme dieser Hülse 27 ist die Bohrung 20 zur
Führung der Stange 21 in dem Befestigungshals
18 mit größerem Durchmesser ausgeführt. Die
Bohrung 28 mit größerem Durchmesser ist noch
weiter in den Befestigungshals hineingeführt,
und es ist dort eine Schraubenfeder 29 eingesetzt, die zwischen dem Grunde der Bohrung 28
und dem unteren Ende der Hülse 27 gespannt ist.

Die Hülse 27 ist mit einer radialen Bohrung
versehen, die vorzugsweise in Form eines achsparallelen Langloches ausgebildet ist und dazu
übereinstimmend ist in dem oberen Ende der
Stange 21 eine Bohrung 30 angeordnet. Diese
Bohrungen dienen zur Aufnahme eines Sicherungsstiftes, mit dem die Hülse 27 gegen Verdrehen gegenüber der Stange 21 gesichert ist.
Oberhalb der Stange 21 läuft die Hülse 27 zu
einem Bolzen 31 zusammen, der einen Schlitz 32
in dem Abschlußdeckel 3 durchdringt. Oberhalb
dieses Schlitzes ist an den Bolzen ein Hammerkopf 33 angeformt, Querschnittsform des Hammerkopfes 33 und des Schlitzes 32 stimmen
überein, so daß dieser Hammerkopf 33 durch
den Schlitz 32 hindurchgeschoben werden kann
und oberhalb des Schlitzes 32 dann zu verdrehen
ist, so daß sich seine beiden Enden auf den Dekkel 3 abstützen. Die Verdrehung des Hammerkopfes 33 erfolgt über die Stange 21 von dem
Hebel 23 aus.

Auf diese Weise ist der Befestigungshals 18
der Kugelkopfkupplung nach dem Einsetzen in
die Hülse 2 zu sichern bzw. zum Herausnehmen
zu entsichern, indem der durch den Deckel 3 hindurchgeführte Hammerkopf 33 mittels des Hebels 23 verdreht wird. Eine weitere Sicherung,
insbesondere die formschlüssige Verbindung
und Verspannung erfolgt durch das Anziehen
des Spannhebels 23. Dadurch wird über die
Stange 21 und den Hammer 33 der Deckel 3 nach
unten gezogen gegen das Paket 11 aus Tellerfedern, die ihrerseits auf dem Vorsprung 10 hülsenfest abgestützt sind. Die Tellerfedern werden
dadurch gespannt, daß obere konische Ende 19
des Befestigungshalses wird fest in den Innenkonus 9 hineingezogen, und auch der Spannhebel 23 wird gegen die Unterseite des Befestigungshalses bzw. die dort angeordnete Auflagescheibe 25 fest angezogen, so daß der Spannhebel nicht mehr, beispielsweise unter eigenem
Gewicht, nach unten schwenken kann. Selbstverständlich ist zur weiteren Sicherung eine in
den Zeichnungen nicht dargestellte Lagerung
und/oder Halterung für den Spannhebel an dem
etwa waagerecht verlaufenden Teil 17 des Kugelhalses angeordnet.

Die Feder 29 unterhalb der Hülse 27 dient
dazu, im entspannten Zustand beim Einsetzen
dafür zu sorgen, daß der Hammer 33 so weit wie möglich von der konischen Fläche 19 an dem Befestigungshals 18 entfernt ist, damit er sicher durch den Schlitz 32 in dem Deckel 3 hindurchgeführt und darüber verschwenkt werden kann.

Eine zusätzliche Sicherung der Kugelkopfkupplung gegen Herausfallen aus der Hülse 2, insbesondere beim Abnehmen, ist dadurch geschaffen, daß ein oder zwei Vorsprünge 34 vorhanden sind, von denen einer als radial aus dem Befestigungshals 18 herausragender Rundstift 35 ausgebildet ist. Die Vorsprünge 34 sind derart angeordnet, daß sie in die Einschnitte 15 am unteren schräg geschnittenen Ende 13 der Aufnahmehülse 2 einpassen. Auf den Rundstift 35 ist eine Sperrklinke 36 schwenkbar aufgesetzt. Die Sperrklinke 36 ist in Form eines Winkelhebels ausgebildet. Der obere Hebelarm 37 verläuft etwa achsparallel zur Aufnahmehülse 2 und Befestigungshals 18. Daran ist ein Klinkenvorsprung 38 angeformt, dessen Oberseite 39 schräg verlaufend ausgebildet ist. An der Hülse 2 ist — bei eingesetztem Befestigungshals — unterhalb des Klinkenvorsprungs 38 — ein Haltestein 40 befestigt, gegen den der Klinkenvorsprung 38 anliegt und der beim Einsetzen mit der Schrägfläche 39 an der Klinke zusammenwirkt, um diese auszulenken, bis die vollständige Einsatzlage erreicht ist.

Der andere Winkelarm 41 unterhalb des lagernden Rundstiftes 35, verläuft parallel zu dem hinteren abgewinkelten Hals 17 der Kugelkopfkupplung und ist an seinem Ende mit einem Handhabungsgriff 42 versehen, der über den Hals 17 hinausragt.

In der Stange 21, dem Befestigungshals 18 sowie in der Hülse 2 oder — wie in der Zeichnung dargestellt — in der Sperrklinke 36 ist eine radial durchgehende Bohrung 43 angeordnet, in die ein Sicherungsstift 44 eingesetzt ist. In bekannter Weise ist dieser Sicherungsstift 44 mit einem äußeren Handgriff 45 versehen, der in einen sich federnd an die Außenfläche des Befestigungshalses anlegenden Teil 46 ausläuft, durch den der Sicherungsstift 44 in der in die Bohrung 43 eingeschobenen Lage gehalten wird.

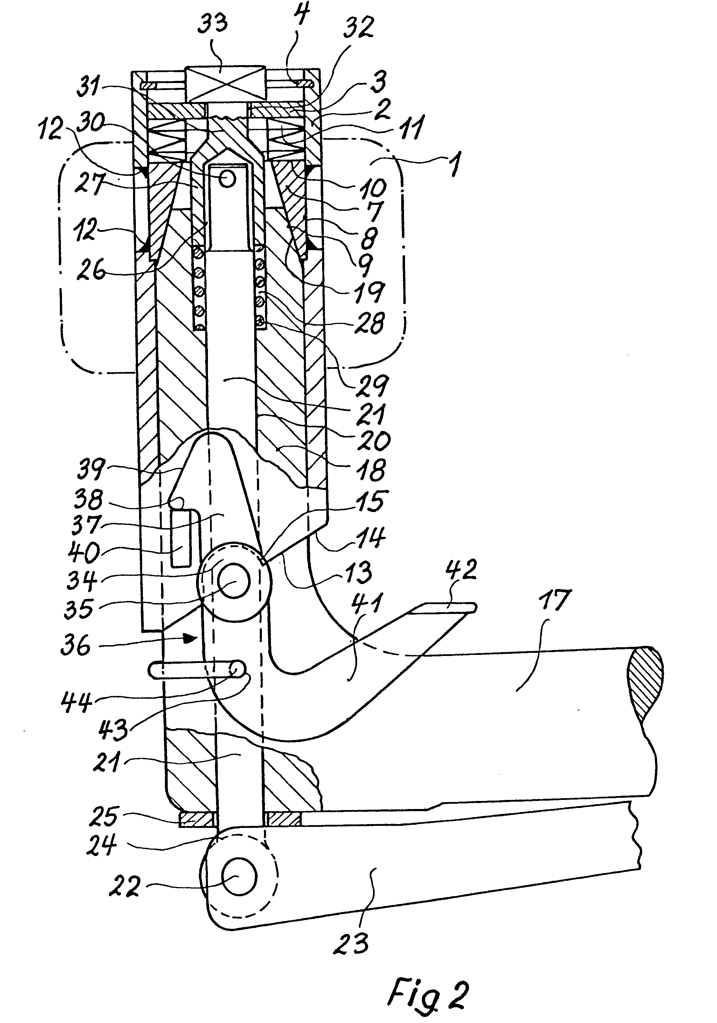

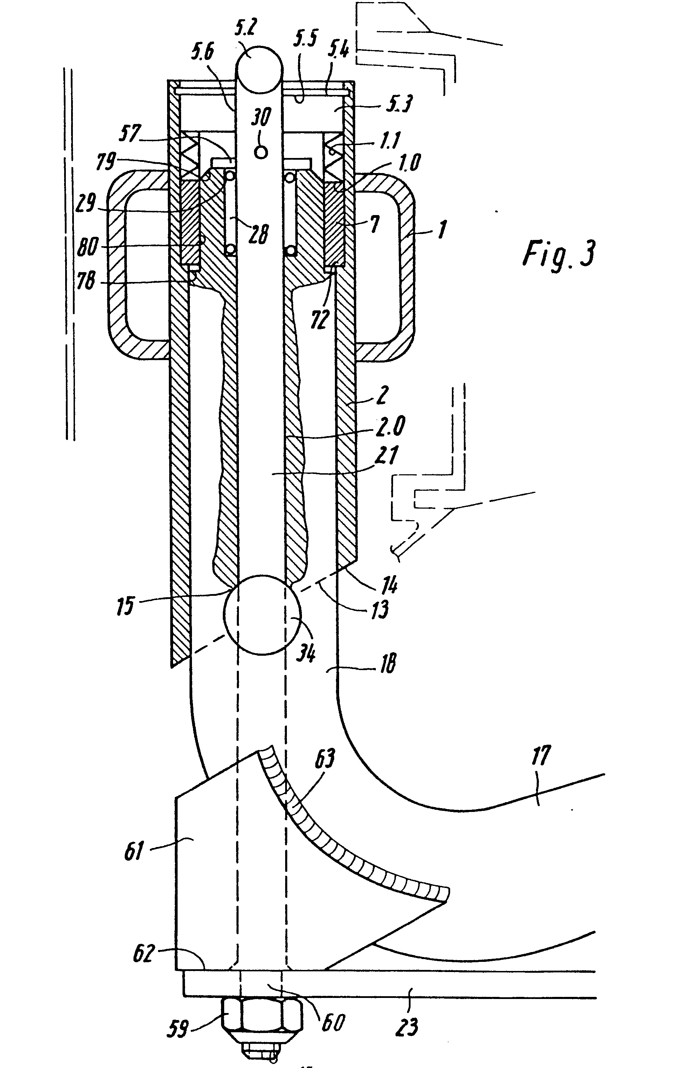

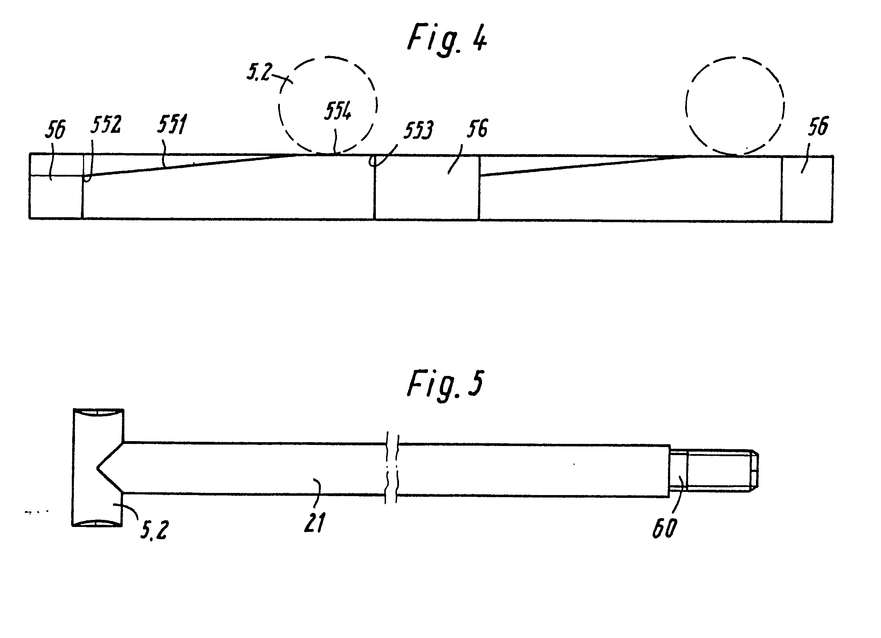

Die nach dem in den Fig. 3—5 dargestellten Ausführungsbeispiel beschriebene Kugelkopfkupplung ist derart ausgebildet, daß sie mit der etwa senkrecht angeordneten Aufnahmehülse 2 in einem Querträger des Fahrzeugaufbaus in Form eines Ovalrohres 1 festsitzt. Es können auch Längsträger oder Schrägträger des Fahrzeugaufbaus zum Anbringen der Hülse 2 verwendet werden. Wesentlich ist, daß die Aufnahmehülse 2 etwa senkrecht und verdeckt am hinteren Ende des Fahrzeugs angeordnet ist. In der Fig. 2 sind noch einige weitere, gestrichelte Linien enthalten, die andeuten wie beispielsweise die hintere Stoßstange des Fahrzeuges angeordnet ist, die die Aufnahmehülse 2 verdeckt.

An dem oberen Ende ist in die Aufnahmehülse 2 ein Deckel 5.3 eingesetzt, der durch einen darüber angeordneten Spannring 5.4 gegen Herausfallen gesichert ist. Der Spannring ist in eine umlaufende Nut am obersten Ende der Aufnahmehülse 2 von innen her eingesetzt.

Der durch den Spannring 5.4 gegen Herausfallen gesicherte Deckel 5.3 ist in der Aufnahmehülse 5.2 in axialer Richtung beweglich und sitzt mit seiner Unterseite nahe des Umfangs auf einem Paket 1.1 aus Tellerfedern, die sich auf einen darunter befindlichen Vorsprung 1.0 in der Aufnahmehülse 2 abstützen. Der Deckel 5.3 ist an seinem Außenumfang mit einer vorstehenden Führungsnase 5.5 versehen, die in einen achsparallel verlaufenden Schlitz 6 in der Aufnahmehülse 2 eingreift. Damit ist der Deckel 5.3 gegen Verdrehen gesichert.

Der Vorsprung 1.0, auf den sich das Federpaket 1.1 abstützt, ist in Form einer Buchse 7 ausgebildet, deren innere und äußere Begrenzungsflächen zylindrisch sind und koaxial zu der Aufnahmehülse 2 verlaufen. Die Wandstärke der Buchse 7 entspricht etwa der radialen Stärke des Federpaketes 1.1, und die Buchse 7 besteht vorzugsweise aus Kunststoff. Am unteren Ende ist die Buchse 7 gegen einen Vorsprung 7.2 in der Innenwandung der Aufnahmehülse 2 abgestützt.

An ihrem unteren Ende ist die Aufnahmehülse 2 schräg abgeschnitten, wobei der höhere Teil 14 des Schrägschnittes 13 nach hinten weist. In den Schrägschnitt sind radial einander gegenüberliegend, auf halber Höhe zwei Einschnitte 15 in der Aufnahmehülse 2 angeordnet.

Die Kugelkopfkupplung mit dem Kugelkopf 16 hat einen abgewinkelten, etwa waagerecht liegenden Hals 17 und einen davon wiederum etwa rechtwinklig abgewinkelten Befestigungshals 18. Der Befestigungshals 18 ist an seinem oberen Ende mit einem Konus 7.9 versehen, und im Abstand darunter, der etwas größer ist als die Höhe der Buchse 7, ist eine Einnehmung 7.8 angeordnet. Auf der Oberfläche des Befestigungshalses 18, die durch den Auslauf des Konus 7.9 begrenzt ist und eine Ringfläche bildet, liegt eine dieser Oberfläche in der Form angepaßte Scheibe 5.7. Die zylindrische Außenfläche des Befestigungshalses 18 zwischen dem Konus 7.9 und der Einnehmung 7.8 hat einen Durchmesser, der dem Innendurchmesser der Buchse 7 entspricht, so daß diese zylindrische Fläche 8.0 an dem Befestigungshals 18 in die Buchse 7 hineinpaßt.

Der Befestigungshals 18 ist mit einer axial durchgehenden Bohrung 20 versehen, in der eine Stange 21 geführt ist. Diese Stange 21 ragt am unteren Ende aus dem Befestigungshals 18 heraus und ist mit einem Widerlager versehen. Dazu ist die Stange 21 an ihrem Ende 60 verjüngt und mit einem Gewinde versehen. Auf dieses verjüngte Ende ist ein Spannhebel 23 aufgesetzt und mit einer Mutter 59 befestigt. Der Spannhebel 23 ist in der Umgebung seiner Befestigung an der Stange 21 mit einer Ausweitung versehen, die einen etwas größeren Durchmesser hat als der Durchmesser der darüber liegenden Teile der Kugelkopfkupplung, nämlich des Befestigungshalses 18 und des etwa waagerecht liegenden Halses 17. An der Abbiegung oder Abwinklung zwischen diesen beiden Halsteilen ist der andere Teil des Widerlagers befestigt in Form von zwei Platten 61, die mittels einer Schweißnaht 63 im Bereich der Abwinklung angebracht sind und mit ihrer unteren waagerechten Kante 62 Auflage und Widerlager für den ausgeweiteten Endteil des Spannhebels 23 bilden. Der Spannhebel 23 ist, gegen die durch die Kanten 62 gebildete Fläche anliegend, mit der Stange 21 drehbar.

An der Stelle nahe ihrem oberen Ende, an der die Stange 21 aus dem etwa senkrecht stehenden Befestigungshals 18 der Kugelkopfkupplung herausragt, ist einer Querbohrung der Stange ein Stift 30 eingesetzt, der sie nach beiden Seiten hin überragt. Dieser Stift 30 sitzt auf der Oberfläche der Scheibe 57 auf. Die Bohrung 20 in dem Befestigungshals 18 ist unterhalb der Scheibe 57 erweitert und bildet eine Aufnahme 28 für eine Schraubenfeder 29. Diese Schraubenfeder 29 ist etwas gespannt und drückt von unten her gegen die Scheibe 57, die ihrerseits über den Stift 30 die Stange 21 in ihrer dargestellten Lage gegenüber dem Befestigungshals 18 hält.

An ihrem oberen Ende ist die Stange 21 unmittelbar über der Oberfläche des Deckelteils 5.3 mit einem Hammerkopf 5.2 versehen. Zum Durchlaß dieses Hammerkopfes 5.2, der nach beiden Seiten über die Stange 21 hinausragt, ist das Deckelteil 5.3 mit einem Durchlaßschlitz 5.6 ausgestattet. Die Oberseite 5.5 des Deckelteils 5.3 ist mit Schrägflächen versehen, die als radiale Keile ausgebildet, von der einen Kante des Schlitzes bis zur gegenüberliegenden Kante keilförmig ansteigen.

In der Abwicklung der Oberseite des Deckelteils 53 ergibt sich ein Querschnitt der Fig. 3, in der aufgrund der Verhältnisse in der Abwicklung der Schlitz 5.6 mehrmals dargestellt ist, und zwar aufeinander folgend auf die jeweils gegenüberliegenden Seiten von der Stange 21. Der Hammerkopf 5.2 ist in dieser Darstellung strichpunktiert umrandet und in einer Stellung am Ende der keilförmigen Schrägfläche dargestellt. Diese keilförmige Schrägfläche 5.5.1 erstreckt sich von der einen Kante 5.5.2 des Schlitzes 5.6 auf der einen Seite der Stange 21 bis zu der anderen Kante 5.5.3 des Schlitzes 5.6 auf der anderen Seite der Stange 21 in schräg ansteigender Linie, wobei zweckmäßig die Schräge schon vor Erreichen der Kante 5.5.3 ihren höchsten Punkt erreicht hat, und zwar an einer Stelle, die etwas weiter entfernt von der Kante 5.5.3 ist als der Durchmesser des Hammerkopfs 5.2. Dadurch wird in der Keilfläche 5.5.1 eine obere waagerechte Ebene 5.5.4 gebildet, auf der für den Hammerkopf eine stabile Lage erreicht ist.

Aus der vorstehenden Beschreibung ist zu erkennen, daß nach Einsetzen des Befestigungshalses 18 und Durchdringen des Hammerkopfes 5.2 durch den Schlitz 5.6 in dem Abschlußdeckel 5.3 mittels des Spannhebels 23 die Stange 18 verdreht wird. Der Spannhebel 23 liegt gegen den unteren Anschlag 62 an, so daß der Hammerkopf 5.2 beim Verdrehen der Stange 21 mittels des Spannhebels 23 nicht nach oben ausweichen kann, vielmehr wird beim Verdrehen des Hammerkopfes der Deckelteil 53 durch den Druck auf die keilförmigen Schrägflächen 5.5.1 auf der Oberfläche des Deckelteils 5.3 nach unten gegen die Wirkung der Tellerfederpakete 1.1 gedrückt und somit verspannt. Durch das Verdrehen der Stange 21 und damit ihres Hammerkopfes 5.2 ist damit nicht nur die Kugelkopfkupplung mit ihrem Befestigungshals 18 in der Hülse 2 eingesetzt und gegen Herausfallen gesichert, sondern auch derart verspannt, daß eine Lockerung ausgeschlossen ist.

Obwohl in der vorstehend beschriebenen Weise eine sichere Befestigung der abnehmbaren Kugelkopfkupplung erreichbar ist, ist es zweckmäßig diese noch weiter dadurch zu verbessern, daß an dem Befestigungshals 18 ein oder zwei Vorsprünge 34 vorgesehen werden, die in die Einschnitte 15 der Aufnahmehülse 2 hineinpassen. Die Anordnung ist derart getroffen, daß die Vorsprünge 34 in den Einschnitten 15 anliegen, wenn der Hammerkopf 5.2 den Schlitz 5.6 in dem Deckelteil 5.3 durchdrungen hat. Beim Verdrehen des Hammerkopfes 5.2 auf den keilförmigen Schrägflächen 5.5.1 wird der Befestigungshals 18 an einem weiteren Eindringen in die Hülse 2 durch die Vorsprünge 34, die gegen die Einschnitte 15 anliegen, gehindert, und es wird ausschließlich der Deckelteil 5.3 gegen die Wirkung des Federpaketes 1.1 nach unten gedrückt und so die Verspannung der einzelnen Teile gegeneinander hergestellt. In jedem Fall ist es jedoch zweckmäßig, wenn der Abstand zwischen der Unterkante der Buchse 7 und der Einnehmung 7.8 an dem Befestigungshals 18 etwas größer ist als der Hub der Schrägfläche 5.5.1 auf der Oberseite des Deckelteils 5.3.

## Patentansprüche

1. Verdeckt an Kraftfahrzeugen anzubringende Kugelkopfkupplung mit einer Aufnahmehülse (2), die etwa senkrecht hinter der Stoßstange angeordnet ist und die keilförmige Schrägflächen (9, 19) zwischen den gegeneinander beweglichen Teilen der Hülse bzw. des Befestigungshalses (18) zum Festspannen nach dem Einsatz mittels in Längsrichtung des Befestigungshalses wirkenden Spannmitteln aufweist, dadurch gekennzeichnet, daß der nach oben abgewinkelte Befestigungshals (18) der Kugelkopfkupplung mit einer, in einer axialen Bohrung des Befestigungshalses geführten Stange (21) versehen ist, an deren oberem Ende ein Hammerkopf (33 bzw. 5.2) zur hintergreifenden Halterung der Stange in einem Deckelabschluß (3 bzw. 5.3) der Hülse (2) bei Verdrehung der Stange (21) und an deren unterem, frei aus dem Befestigungshals herausragenden Ende ein Betätigungshebel (23) vorgesehen ist, und wobei die Spannmittel über die Stange und den Hammerkopf aktiviert werden.

2. Kugelkopfkupplung nach Anspruch 1, dadurch gekennzeichnet, daß an der Stange (21) am unteren Ende ein, von dem Betätigungshebel (23) verdrehbarer Exzenter (24) gelagert ist und am oberen Ende der Stange eine Hülse (27) angeschraubt ist, an deren oberem Ende der Hammerkopf (33) sitzt.

3. Kugelkopfkupplung nach Anspruch 1, dadurch gekennzeichnet, daß der Betätigungshebel (23) als Spannhebel gegen ein am Befestigungshals (18) angeordnetes Widerlager (62) anliegt und die Oberseite des Deckelteils (5.3) der Hülse (2) mit von radial einander gegenüberliegenden Kanten (5.5.2) des Durchlaßschlitzes (5.6) ansteigenden, bis zu den Gegenkanten (5.5.3) reichenden keilförmigen Schrägflächen (5.5.1) versehen ist.

4. Kugelkopfkupplung nach Anspruch 1, dadurch gekennzeichnet, daß der Abschlußdeckel (3 bzw. 5.3) im oberen Ende der Aufnahmehülse (2) axial beweglich geführt und über ein Paket (11) aus Tellerfedern auf einem hülsenfesten Vorsprung (10) abgestützt ist.

5. Kugelkopfkupplung nach Anspruch 1 und einem der folgenden Ansprüche, dadurch gekennzeichnet, daß die Führung des Abschlußdeckels (3) mittels mindestens einer radial vorstehenden Führungsnase (5) erfolgt, die einen achsparallel verlaufenden Schlitz (6) in der Aufnahmehülse (2) durchdringt.

6. Kugelkopfkupplung nach Anspruch 2, dadurch gekennzeichnet, daß der hülsenfeste Vorsprung (10) aus einer Einsatzhülse (7) gebildet ist, deren Außenmantel (8) zylindrisch der Innenfläche der Aufnahmehülse (2) angepaßt ist und deren Innenraum (19) konisch mit nach oben abnehmendem Querschnitt ausgebildet ist.

7. Kugelkopfkupplung nach Anspruch 2 und 6, dadurch gekennzeichnet, daß das obere Ende des Befestigungshalses (18) mit einem Konus (19) versehen ist.

8. Kugelkopfkupplung nach Anspruch 2, 5 und folgenden, dadurch gekennzeichnet, daß die an dem oberen Ende der Stange (21) angeschraubte Hülse (27) in einer Bohrung (28) geführt ist, die in dem oberen Ende des Befestigungshalses (18) angeordnet ist und unterhalb der geschraubten Hülse (27) eine Schraubendruckfeder (29) enthält.

9. Kugelkopfkupplung nach Anspruch 8, dadurch gekennzeichnet, daß die auf die Stange (21) geschraubte Hülse (27) mittels eines durch eine radiale Bohrung (30) in der Stange (21) und ein Langloch in der Hülse (27) geführten Stiftes gegen Verdrehen gesichert ist.

10. Kugelkopfkupplung nach Anspruch 3, dadurch gekennzeichnet, daß der hülsenfeste Vorsprung aus einer Buchse (7) gebildet ist, die als Hohlzylinder ausgebildet, mit ihrem unteren Ende gegen einen Vorsprung (7.2) der Aufnahmehülse (2) anliegt.

11. Kugelkopfkupplung nach Anspruch 3 und 10, dadurch gekennzeichnet, daß die Stange (21) oberhalb des Konus (7.9) mit einem durch eine Querbohrung gesteckten Stift (30) versehen ist, der auf einer Scheibe (5.7) aufliegt, die ihrerseits auf dem Konus (7.9) liegt.

12. Kugelkopfkupplung nach Anspruch 11, dadurch gekennzeichnet, daß in dem oberen Ende des Befestigungshalses (18) und unterhalb der Scheibe (5.7) eine Schraubendruckfeder (29) angeordnet ist.

13. Kugelkopfkupplung nach Anspruch 1 und folgenden, dadurch gekennzeichnet, daß die Aufnahmehülse (2) am unteren offenen Ende schräg abgeschnitten ist, mit dem höheren Teil (14) des Schrägschnittes (13) nach hinten weisend.

14. Kugelkopfkupplung nach Anspruch 1 und 13, dadurch gekennzeichnet, daß in den Schrägschnitt (13) radial einander gegenüberliegend, auf halber Höhe, zwei Einschnitte (15) in der Aufnahmehülse (2) angeordnet sind.

15. Kugelkopfkupplung nach Anspruch 1 und 14, dadurch gekennzeichnet, daß an dem Befestigungshals (18) mindestens ein radial herausragender, an einem der Einschnitte (15) eingreifender Vorsprung (24) angeordnet ist.

16. Kugelkopfkupplung nach Anspruch 15, dadurch gekennzeichnet, daß der Vorsprung (34) als Rundstift (35) ausgebildet ist und außerhalb der Aufnahmehülse (2) eine Sperrklinge (36) in Form eines Winkelhebels lagert, dessen etwa achsparalleler Winkelarm (37) mit einem Klinkenvorsprung (38) einen hülsenfesten Haltestein (40) hintergreift und dessen anderer Winkelarm (41) etwa parallel zu dem unteren abgewinkelten Hals (17) der Kugelkopfkupplung verlaufend, diese mit einem Handhabungsgriff (42) an seinem Ende überragt.

17. Kugelkopfkupplung nach Anspruch 16, dadurch gekennzeichnet, daß der Haltestein (40) in Fahrtrichtung vor dem Rundstift (35) an der Aufnahmehülse (2) befestigt ist.

18. Kugelkopfkupplung nach Anspruch 1, dadurch gekennzeichnet, daß vorzugsweise nahe ihrem anderen Ende die Aufnahmehülse (2) und/ oder die Sperrklinke (36), der Befestigungshals (18) und die Stange (21) mit einer durchgehenden Bohrung (43) zur Aufnahme eines Sicherungsstiftes (44) versehen ist.

19. Kugelkopfkupplung nach Anspruch 1, dadurch gekennzeichnet, daß der Hammerkopf (33) und Spannhebel (23) an den beiden Enden der Stange (21) etwa in einem rechten Winkel zueinander angeordnet sind und der Schlitz (32) in dem Abschlußdeckel (3) etwa parallel zur Fahrzeuglängsachse angeordnet ist.

20. Kugelkopfkupplung nach Anspruch 19, dadurch gekennzeichnet, daß an dem etwa waagerecht verlaufenden Teil (17) des Kugelhalses eine Lagerung und/oder Halterung für den Spannhebel (23) angeordnet ist.

**Claims**

1. Ball-neck coupling for motor vehicles, comprising a pick-up sleeve (2) being arranged approximately vertically behind the bumper and having wedge-shaped faces (9, 19) between the parts movable with respect to each other of the sleeve and the fastening collar (18) for tightening after utilization by means of tightening means acting longitudinally with respect to the tightening collar, characterized by that the tightening collar (18) angled towards top of the ball-neck coupling is provided with a rod (21) guided in an axial bore of the tightening collar, at the upper end of said rod a hammer head (33 or 5.2, resp.) being provided for holding the rod in a cover end (3 or 5.3, resp.) in case of turning of the rod (21) and at the lower end of said rod protruding freely from the tightening collar an actuator lever (23) being provided, and whereby the tightening means are activated over the hammer head.

2. Ball-neck coupling according to claim 1, characterized by that at the lower end of the rod (21), an eccentric device (24) turnable by the actuator lever (23) is borne and that a sleeve (27) is screwed to the upper end of said rod, whereby a hammer head (33) is arranged at the upper end of said sleeve.

3. Ball-neck coupling according to claim 1, characterized by that the actuator lever (23) rests against a thrust (62) arranged at the tightening collar (18) and that the upper side of the cover part (5.3) of the sleeve (2) is provided with wedge-shaped faces (5.5.1) rising from the edges (5.5.2) being arranged radially opposite to each other of the passage slot (5.6) up to the counter edges (5.5.3).

4. Ball-neck coupling according to claim 1, characterized by that the end cover (3 or 5.3, resp.) is movable axially in the upper end of the pick-up sleeve (2) and is supported on a sleeve-integrated projection (10) over a set (11) of cup springs.

5. Ball-neck coupling according to claim 1 and to one of the following claims, characterized by that the guiding of the end cover (3) is effected by means of at least one radially protruding guiding nose (5) entering into a concentric slot (6) of the pick-up sleeve (2).

6. Ball-neck coupling according to claim 2, characterized by that the sleeve-integrated projection (10) is formed by an inset sleeve (7) the outer jacket (8) of which is adapted cylindrically to the inside face of the pick-up sleeve (2) and the inside space of which (19) is designed conically with a cross section decreasing towards top.

7. Ball-neck coupling according to claims 2 and 5, characterized by that the upper end of the tightening collar (18) is provided with a cone (19).

8. Ball-neck coupling according to claims 2, 5 and following, characterized by that the sleeve (27) screwed to the upper end of the rod (21) is guided in a bore (28) being arranged in the upper end of the tightening collar (18) and containing a compression spring (29) underneath the screwed sleeve (27).

9. Ball-neck coupling according to claim 8, characterized by that the sleeve (27) screwed to the rod (21) is secured against being turned by means of a pin guided through a radial bore (30) in the rod (21) and a slotted hole in the sleeve (27).

10. Ball-neck coupling according to claim 3, characterized by that the sleeve-integrated projection is formed by a bushing (7) being designed as a hollow cylinder and resting by its lower end against a projection (7.2) of the pick-up sleeve (2).

11. Ball-neck coupling according to claims 3 and 10, characterized by that the rod (21) is provided above the cone (7.9) with a pin (30) inserted through a lateral bore, this pin resting on a disk (5.7) which for its part rests on the cone (7.9).

12. Ball-neck coupling according to claim 11, characterized by that in the upper end of the tightening collar (18) and underneath the disk (5.7) a compression spring (29) is arranged.

13. Ball-neck coupling according to claim 1 and the following claims, characterized by that the pick-up sleeve (2) is cut off in sloped manner at its open lower end showing backward by the higher part (14) of the diagonal cut (13).

14. Ball-neck coupling according to claims 1 and 13, characterized by that two cuts (15) are arranged radially opposite to each other on half height in the pick-up sleeve (2).

15. Ball-neck coupling according to claims 1 and 14, characterized by that on the tightening collar (18) at least one radially protruding projection (24) engaging into one of the cuts (15) is arranged.

16. Ball-neck coupling according to claim 15, characterized by that the projection (34) is designed as round pin (35) and bears a catch (36) shaped as an angled lever outside the pick-up sleeve (2) the angled arm (37) of said lever being in engagement with a holding stone (40) via its pawl projection (38) and the other angled arm (41) of which being approximately parallel to the lower angled neck (17) of the ball-neck coupling and projecting above it by a handle (42) at its end.

17. Ball-neck coupling according to claim 16, characterized by that the holding stone (40) is fastened to the pick-up sleeve (2) before the round pin (35) as seen in running direction.

18. Ball-neck coupling according to claim 1, characterized by that preferably close to its other end, the pick-up sleeve (2) and/or the pawl (36), the fastening collar (18) and the rod (21) is provided with a through-bore (43) for accepting a locking-pin (44).

19. Ball-neck coupling according to claim 1, characterized by that the hammer head (33) and the tightening lever (23) are arranged vertically to each other at both ends of the rod (21) and that the slot (32) in the end cover (3) is arranged approximately in parallel to the vehicle's longitudinal axis.

20. Ball-neck coupling according to claim 19, characterized by that at the part (17) being approximately horizontal of the ball-neck coupling, a bearing and/or a support for the tightening lever (23) is arranged.

## Revendications

1. Attelage à rotule se montant hors de la vue sur les véhicules automobiles, comportant une douille réceptrice (2) qui est disposée à peu près verticalement derrière le pare-chocs et qui présente des surfaces inclinées formant coin (9, 19) entre les parties mobiles l'une par rapport à l'autre de la douille et du col de fixation (18) pour le blocage après l'engagement, par des moyens de serrage agissant dans la direction longitudinale du col de fixation, caractérisé par le fait que le col de fixation dirigé vers le haut (18) de l'attelage è rotule est pourvu d'une tige (21) montée dans un alésage axial du col de fixation à l'extrémité supérieure de laquelle est formée une tête de marteau (33 ou 5.2) pour le maintien avec soutien d'en-dessous de la tige dans un couvercle (3 ou 5.3) de la douille (2) lors de la rotation de la tige (21) et à l'extrémité inférieure, dépassant du col de fixation, de laquelle est monté un levier de manœuvre (23), les moyens de serrage étant actionnés par l'intermédiaire de la tige et de la tête de marteau.

2. Attelage à rotule selon la revendication 1, caractérisé par le fait qu'à l'extrémité inférieure de la tige (21) est monté un excentrique (24) qui peut être tourné par le levier de manœuvre (23), et à l'extrémité supérieure de la tige est vissée une douille (27) à l'extrémité supérieure de laquelle se trouve la tête de marteau (33).

3. Attelage à rotule selon la revendication 1, caractérisé par le fait que le levier de manœuvre (23), jouant le rôle de levier de serrage, est appuyé contre une butée (62) disposée sur le col de fixation (18), et la face supérieure du couvercle (5.3) de la douille (2) présente des surfaces inclinées formant coin (5.5.1) qui montent à partir de bords radialement opposés (5.5.2) de la fente de passage (5.6) et vont jusqu'aux bords opposés (5.5.3).

4. Attelage à rotule selon la revendication 1, caractérisé par le fait que le couvercle (3 ou 5.3) est monté mobile axialement dans l'extrémité supérieure de la douille réceptrice (2) et est supporté par une saillie (10) solidaire de la douille par l'intermédiaire d'une pile (11) de rondelles Belleville.

5. Attelage à rotule selon la revendication 1 et l'une des revendications suivantes, caractérisé par le fait que le couvercle (3) est guidé par au moins un ergot (5) saillant radialement qui passe par une fente (6) découpée parallèlement à l'axe dans la douille réceptrice (2).

6. Attelage à rotule selon la revendication 2, caractérisé par le fait que la saillie (10) solidaire de la douille est formée d'une douille rapportée (7) dont la surface latérale extérieure (8), cylindrique, est adaptée à la surface intérieure de la douille réceptrice (2) et dont la surface intérieure (9) est conique avec section décroissant vers le haut.

7. Attelage à rotule selon les revendications 2 et 6, caractérisé par le fait que l'extrémité supérieure du col de fixation (18) comporte un cône (19).

8. Attelage à rotule selon les revendications 2, 5 et suivantes, caractérisé par le fait que la douille (27) vissée à l'extrémité supérieure de la tige (21) est montée dans un alésage (28) creusé dans l'extrémité supérieure du col de fixation (18) et contient au-dessous de la douille vissée (27) un ressort hélicoïdal de compression (29).

9. Attelage à rotule selon la revendication 8, caractérisé par le fait que la rotation de la douille (27) vissée sur la tige (21) est empêchée par une goupille passant par un trou radial (30) de la tige (21) et un trou allongé de la douille (27).

10. Attelage à rotule selon la revendication 3, caractérisé par le fait que la saillie solidaire de la douille est formée par une douille (7) constituée d'un cylindre creux dont l'extrémité inférieure s'appuie contre une saillie (7.2) de la douille réceptrice (2).

11. Attelage à rotule selon les revendications 3 et 10, caractérisé par le fait que la tige (21), au-dessus du cône (7.9), comporte une goupille (30) passant par un trou transversal qui s'appuie sur une rondelle (5.7) qui s'appuie elle-même sur le cône (7.9).

12. Attelage à rotule selon la revendication 11, caractérisé par le fait que dans l'extrémité supérieure du col de fixation (18) et au-dessous de la rondelle (5.7) est disposé un ressort hélicoïdal de compression (29).

13. Attelage à rotule selon les revendications 1 et suivantes, caractérisé par le fait que la douille réceptrice (2), à son extrémité inférieure ouverte, est taillée en biseau, la partie la plus haute (14) du biseau (13) étant à l'arrière.

14. Attelage à rotule selon les revendications 1 et 13, caractérisé par le fait que dans le biseau (13) de la douille réceptrice (2) sont creusées à mi-hauteur deux entailles diamétralement opposées (15).

15. Attelage à rotule selon les revendications 1 et 14, caractérisé par le fait que sur le col de fixation (18) est formée au moins une saillie radiale (34) qui s'engage dans une des entailles (15).

16. Attelage à rotule selon la revendication 15, caractérisé par le fait que la saillie (34) est formée d'une cheville ronde (35) et qu'à l'extérieur de la douille réceptrice (2) est monté un cliquet (36) formé d'un levier coudé dont un bras (37), à peu près parallèle à l'axe, s'engage par une saillie (38) derrière un grain d'arrêt (40) solidaire de la douille, et l'autre bras (41), à peu près parallèle au col inférieur à angle droit (17) de l'attelage à boule, surplombe à son extrémité celui-ci par une manette (42).

17. Attelage à rotule selon la revendication 16, caractérisé par le fait que le grain d'arrêt (40) est fixé sur la douille réceptrice (2) en avant de la cheville ronde (35) dans le sens de la marche.

18. Attelage à rotule selon la revendication 1, caractérisé par le fait que la douille réceptrice (2), de préférence près de son autre extrémité, et/ou le cliquet (36), le col de fixation (18) et la tige (21) sont percés d'un trou traversant (43) destiné à recevoir une goupille d'arrêt (44).

19. Attelage à rotule selon la revendication 1, caractérisé par le fait que la tête de marteau (33) et le levier de serrage (23) sont disposés aux deux extrémités de la tige (21) à peu près à angle droit l'un de l'autre, et la fente (32) du couvercle (3) est à peu près parallèle à l'axe longitudinal du véhicule.

20. Attelage à rotule selon la revendication 19, caractérisé par le fait que la partie à peu près horizontale (17) du col porte-boule présente un logement et/ou un support pour le levier de serrage (23).

Fig.1

0 047 961

Fig 2

0 047 961

Fig. 3

## Fig. 4

56   552   551   5.2   554   553   56   56

## Fig.5

5.2   21   60